# EUROPEAN PATENT APPLICATION

(11) **EP 1 738 841 A2**
(43) Date of publication of application: **03.01.2007**
(21) Application number: 06114574.4
(22) Date of filing: 26.05.2006
(51) Int. Cl.: B21D 35/00

(54) **Metal forming and threading line**

(30) Priority: 28.06.2005 IT PN20050041
(71) Applicant: BORDIGNON, Alberto, 36027 Rosa´ VI (IT); BORDIGNON, Simone, 36027 Rosa´ VI (IT)
(72) Inventor: BORDIGNON, Alberto, 36027 Rosa´ VI (IT); BORDIGNON, Simone, 36027 Rosa´ VI (IT)
(74) Representative: Giugni, Valter

(57) **Abstract**

Automatic metalworking line, in particular of the kind used in connection with sheet-metal forming presses, comprising a plurality of forming (S1,S2,S3) and threading (F1,F2,F3) stations, and adapted to process in a step-by-step sequence a succession of mechanical workpieces (101,102,103), wherein said forming stations are included in a respective forming line (1) and said threading stations are provided along a respective threading line (1A), which is arranged at the end of said forming line; said threading stations are provided in a number that is not smaller than the ratio (K) of the threading cycle time on said threading line to the forming cycle time or pace time on said forming line; and it is provided with transfer means adapted to queue up said mechanical workpieces into a row (9) along the threading line and transfer said workpieces jointly onto respective ones of said threading stations.

## Description

The present invention refers to a metal forming line using presses for processing mechanical parts, typically sheet-metal parts, in which there are provided bores that must also be threaded internally.

The present invention applies to so-called progressive step-by-step or transfer forming lines, which are comprised of a plurality of workstations and automatic transfer means that are provided to transfer the individual mechanical parts being processed from a workstation to the next one, and so on until all processing steps are completed, wherein each such processing step is performed at a respective workstation.

While the following description is referred to a progressive step-by-step forming line used to process individual mechanical parts, this shall by no means be understood as a limitation of the scope of the present invention to such kind of lines, since it rather extends to also cover lines handling mechanical parts that are not physically separated from each other already at the beginning of the line, i.e. are physically configured so as to be able to cope with individual mechanical parts that are firmly joined with each other by appropriate joining means due to be removed - so as to separate said parts from each other - just at the end of the line.

The above-noted transfer means are usually comprised of a single translational shifter, or even a plurality of translational shifters, which are adapted to pick up the individual parts being processed from each individual workstation, and transfer it - in a substantially synchronized manner - to the next workstation, and so on until all workstations have been covered and the whole sequence of processing steps has been completed. On the other hand, the technique concerning such transfer lines is largely and generally known in the art, so that any further explanation shall be omitted here.

Quite often the need arises for these metal processing lines to be used not only to perform usual metal forming and - possibly - even boring operations, but also operations intended to cut threads in the bores so provided in the processed parts.

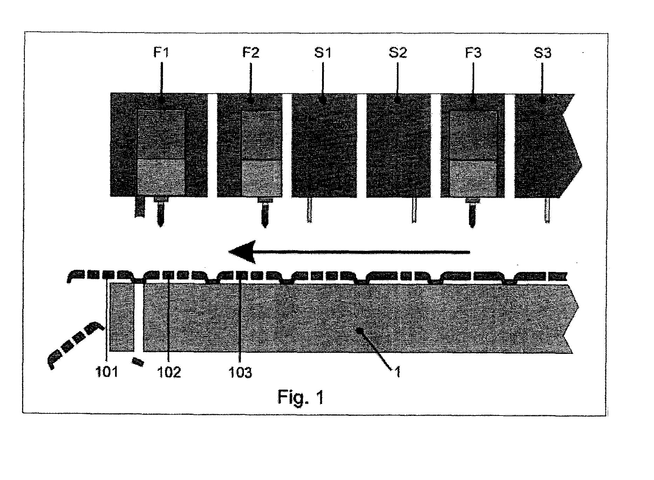

To this purpose, and with reference to Figure 1, such transfer or progressive metalworking line 1 is provided with not only a plurality of actual metal forming and boring stations S2, S3, S4..., but also a plurality of thread-cutting stations F1, F2, F3, etc.

It will at this point become fully clear how the concepts described in this specification do not only apply to thread-cutting or thread-forming operations, actually, but also to all such operations that may be performed in these lines and generally put serious limitations to press cycle-times or require the use of expensive dies, or even require the use of rather simple tools, such as in the case of deburring, trimming or similar operations. Therefore, as used hereinafter, the term "threading" or "thread-cutting" shall be understood to automatically include and refer to any other kind of metalworking operation, such as deburring, trimming, reaming, marking, labelling, and the like, that may be carried out in metalworking lines of the considered kind - even if such operations are not explicitly mentioned.

Typically, a metalworking line of the considered type would include a single threading station adapted to perform all of the required thread-cutting operations. However, the following description will of course more generally consider the case that does not exclude the possibility for a plurality of distinct threading stations to be provided in an appropriately distributed arrangement - together with the other metal forming operations - along the progressive transfer line.

The presence of distinct threading stations integrated in a metalworking line and the execution of the thread-cutting operations connected with each such threading station give obviously rise to a number of rather serious drawbacks, i.e.:
- metal-forming operations are generally capable of being performed in a rather quick manner, whereas threading is an inherently slow metalworking process; as a result, owing to the rigid synchronicality and successive order, i.e. sequencing of the various operations, the duration of each single processing step shall of course correspond to the duration of the slowest-to-perform operation, which - as noted above - is the threading one, and this puts a limitation on the productivity of the entire line, thereby determining serious and quite apparent efficiency losses;
- a second drawback has more specifically to do with the lubrication oils: in fact, lubrication oils used in metal forming operations are different from and - quite often - even incompatible with oils generally used in thread-cutting operations; however, in industrial progressive transfer metalworking lines there most easily and unavoidably occurs that oil tends to pass from workstation to workstation due to its being sprayed over, or leaking, or again being dragged over by the same mechanical parts as they are transferred from a workstation to the next one, and this does of course not fail to bring about segregation and production-related problems and drawbacks, which all those skilled in the art are fully aware of;
- a third drawback is connected with the chips that are formed during thread-cutting operations or, anyway, generated during threading operations implying the removal of chips; these chips, in fact, tend to most easily spread and scatter all around, thereby reaching also the contiguous forming stations, where they give rise to a whole set of problems, mainly owing to the fact that they settle on parts to be formed, so that they are eventually pressed jointly with the parts on which they have settled;
- a fourth drawback derives from the space occupied by the threading stations along the line, and the related costs; in fact, if integrated in a progressive metalworking line, a threading operation, although inherently simple and low-cost in its character (it does not require either presses or dies), does nevertheless require all of the set-up, materials, transfer means, space, etc. of a regular workstation, regardless of the kind of processing being carried out there, and the resulting costs in general terms are certainly high, as anyone skilled in the art is well aware of.

These drawbacks are further aggravated by the fact that, as far as the time required to complete a threading operation is concerned, this is made longer by two distinct factors:
a) the materials to be threaded become increasingly harder and this causes threading operations to adapt to such materials, so that, all other production factors remaining unaltered, they tend to become increasingly slower;
b) mechanical parts to be threaded are transferred to the threading station in a geometrically quite inaccurate manner; this makes it necessary for accurate positioning means to be used, e.g. in the form of guide pins or similar provisions as widely known as such in the art, which apply themselves to the parts to be threaded so as to true them up correctly before submitting them to threading; however, such guide pins follow the downward movement of the dies and, as a result, they only become inserted in the respective mechanical parts during the final portion of the downstroke of the die; this practically means that it is only during the short time of the final portion of such downward movement that the part being processed is centered and can therefore be submitted to threading, while the much longer preceding portion of the forming cycle is practically wasted to such effect. As this can be readily appreciated, this causes the entire metalworking cycle to depend on the threading step, which, as noted above, can only be carried out during a short portion of the same cycle, thereby contributing to a further slowdown in the actual speed at which threading operations can be performed and, as a result, in the pace of the entire progressive line, while ultimately affecting its production efficiency accordingly.

It would therefore be desirable, and it is actually a main object of the present invention, to provide a solution enabling an automatic metalworking and forming line to be embodied, which includes a plurality of both forming operations and one or more threading operations, while doing away with the various drawbacks of prior-art solutions as described above; in addition such metalworking line must ensure a great degree of simplicity and convenience in both use and construction, and must be capable of being manufactured with the use of existing, readily available materials and techniques.

According to the present invention, these aims are reached in a metalworking line of the above-described kind incorporating the features and characteristics as described and recited in the appended claims. Features and advantages of the present invention will anyway be more readily and clearly understood from the description that is given below by way of non-limiting example with reference to the accompanying drawings, in which:
- Figure 1 is a schematical view of a symbolical representation of a metalworking and forming line of the progressive type according to the prior art;
- Figure 2 is a schematical and symbolical view of a corresponding representation of a metalworking and forming line of the progressive type according to a first embodiment of the present invention;
- Figure 3 is a schematical view of a representation of a portion of the line illustrated in Figure 2, with some workpieces moving thereupon;
- Figures 4 to 7 are respective schematical views of the line shown in Figure 2, as viewed in different successive working steps;
- Figure 8 is a symbolical view of an embodiment of a portion of the line according to the present invention;
- Figure 9 is a symbolical view of an embodiment of a different portion of the line according to the present invention;
- Figure 10 is a view representing a particular case of an embodiment of the present invention;
- Figure 11 is a view of a different embodiment of the present invention;
- Figure 12 and Figure 13 are views of respective bore aggregation and threading modes according to two possibilities as far as relative distances between the bores in a same workpiece are concerned;
- Figure 14 is a view of a particular embodiment of two threading stations, corresponding to the kind of bores as represented in Figure 13;
- Figure 15 is a view of a general embodiment of a plurality of threading stations corresponding to the kind of bores as represented in Figure 13;
- Figures 16 to 20 are schematical views of a corresponding succession of operating modes of a typical embodiment of the present invention.

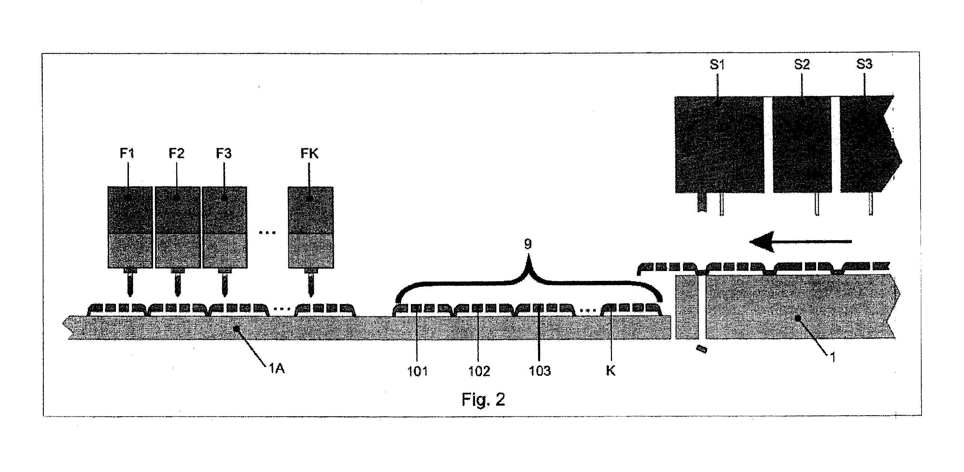

With reference to Figure 2, a metal forming and threading line 1 according to the present invention is based on the principle according to which the individually slowest workstations, i.e. the workstations F1, F2, F3 ... used to thread previously drilled or, anyway, made bores in press-formed workpieces 101, 102, 103 ... in this particular case, instead of being distributed along or integrated in the progressive metalworking line 1, or anyway rigidly linked with such line feeding the metal forming stations S1, S2, S3 ..., are on the contrary taken out of the same line, and are therefore fully disengaged from said progressive metalworking line, so as to be allowed to operate independently of such line after that the individual workpieces have been taken out from said progressive line.

Since said bore threading operations are slower than the actual forming operations performed on said progressive metalworking line, the time T_{f} needed to perform the slowest threading operation will of course be longer than the time Tₛ needed to perform the slowest forming operation on said progressive metalworking line, wherein the latter is most obviously conditioning the general pace of the progressive metalworking line as a whole.

As a result, the ratio of T_{f} to Tₛ will be greater than one, and is identified as a ratio K. However, the whole plant must be provided and made so as to ensure that, in the time of a step of the progressive line, i.e. in the time during which a finished workpiece is produced by such line, also the due threading operations can be performed on each such workpiece, so that the two kinds of metalworking operations, i.e. the forming operations on the progressive line and the threading operations in the other off-line workstations F1, F2, F3 ..., are synchronized so as to most obviously obtain a "levelled", i.e. smooth production pace and eliminate any useless waiting time that might affect both the progressive line itself and the threading stations.

As a result, such value K, which - as noted above - represents the ration of the step time T_{f} of the bore threading line to the time Tₛ needed for the forming operations on the progressive line, shall therefore be assumed as representing the number of threading stations that must work in parallel, i.e. at the same time, in view of being able to perform the "K" threading operations in the same time that the progressive line completes a step.

It is in fact just in this way that "K" threading operations can be performed in the time T_{f}, which is however a time that is by "K" times greater than the step time Tₛ.

Basically, it can therefore be stated that, in the time T_{f} = K·Tₛ, i.e. in a time that is "K" times longer than the step time of the progressive forming line, there are performed K concurrent threading operations, and this means that, on an average, a single threading operation is performed in the time Tₛ, thereby allowing the desired "levelling" effect to be obtained as far as the overall production pace is concerned.

In view of solving this problem, a classic solution would call for a certain number of bore threading lines to be physically provided in parallel, this being namely a number equal to K or the next greater whole number, and to be regularly and orderly fed with the workpieces that are produced in the progressive forming line.

This solution, however, has some major drawbacks lying basically in the need for not only the individual threading machines, but also the complete threading lines - with the related mechanisms associated therewith - to be multiplied accordingly. The need furthermore arises in this case for the distribution, handling and transfer means, which pick up the workpieces at the outlet end of the progressive forming line and deliver them to the individual threading lines, to be provided and arranged so as to operate in a synchronized manner.

These automatic handling and transfer means are clearly quite complicated and expensive and, moreover, must be synchronized in a very accurate manner, thereby implying added operating and construction difficulties and complications that do not certainly fail to turn into further costs to be sustained.

Now, according to the present invention, this problem is solved in an original manner through the use of a single threading line 1A, on which there are however arranged - appropriately spaced from each other, obviously - a number K of individual threading stations F1, F2, F3, ...

This threading line 1A is of course arranged downstream from the progressive forming line 1, and is fed with the workpieces produced by the latter in a manner as generally known as such in the art according to the sequence and pace of the same progressive forming line 1.

Each one of said threading stations processes a respective workpiece, while all such threading operations are performed concurrently. This is practically how the afore-cited classic solution of having the related threading operations performed on distinct and dedicated lines, is appropriately changed so as to have said operations performed still concurrently, and still using K distinct threading stations, but on a same and single threading line, along which said stations are arranged.

The problem at this point turns into one of having the workpieces 101, 102, 103 ...at the outlet end of the progressive forming line 1 appropriately positioned concurrently at respective sites along the threading line 1A, namely in correspondence to the respective K threading stations.

Basically, the problem comes down to creating a row 9 of stand-by, i.e. waiting workpieces due to be processed on a single line 1A arranged at the outlet end of the progressive line 1, and waiting for said row 9 to be automatically supplied with the workpieces leaving the progressive line 1. When the workpieces in said stand-by row 9 eventually reach up to K in number, then all such workpieces in said stand-by row 9 are concurrently transferred forwards onto and along the threading line 1A, so that each workpiece comes to lie exactly under a respective threading station F1, F2, F3 ...

From this moment on, each workpiece 101, 102, 103, ... is processed individually by the respective station, while a new stand-by row 9 of workpieces is formed upstream to said threading line, waiting for being in turn transferred concurrently to the respective ones of said threading stations F1, F2, F3, ...

Threading operations are concluded in a time T_{f}, which is equal to K·Tₛ; however, since the pace of the forming line corresponds exactly to the time Tₛ, it can be readily appreciated that the number of workpieces to be queued up before being fed all together and concurrently to the K threading stations, amounts exactly to K workpieces.

Basically, to state it in simpler terms, all it takes is to form - at the outlet end of the progressive line 1 - a queue 9 of workpieces, the number of which corresponds to the ratio of the time T_{f} to the time Tₛ, and, when this number is eventually reached, to have such row 9 of workpieces displaced concurrently along said single threading line 1A onto an equal number of corresponding threading stations that work in an independent, but synchronous manner.

As far as the way is concerned, in which the above-cited process is carried out and the related plant is embodied, this may occur according to a number of different concepts and modes, all of them generally known as such in the art, since they basically involve the basic process of handling workpieces, either individually or in a clustered arrangement, along a same line.

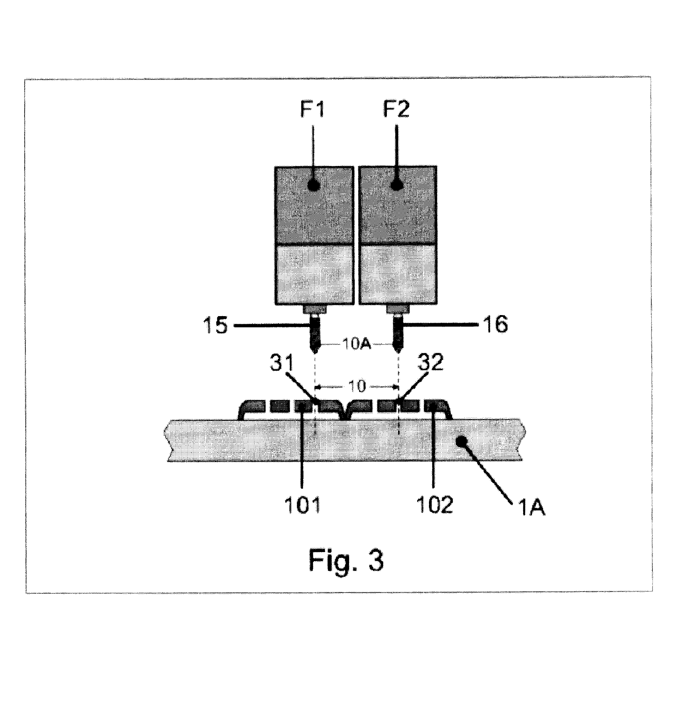

With reference to Figure 3, let us assume now that the centre-to-centre distance 10 between the two bores to be threaded 31, 32 of two successive and contiguous individual workpieces 101, 102 is greater than or equal to the centre-to-centre distance 10A between the mandrels or thread-cutting bits 15, 16 of the corresponding threading stations F1, F2, so that these would not interfere with each other. In this case, it is most appropriate for the individual workpieces to be fed onto the line in a row, one after the other and in contact with each other, so as to form a continuous line without any interruption between the workpieces.

Furthermore, when the individual workpieces are in contact with each other, and since the longitudinal dimensions thereof are well known, all it takes is to appropriately position the last workpiece in correspondence to the respective last threading station in order to have also all other workpieces automatically placed and fitted in the respective correct position thereof relative to the corresponding threading stations.

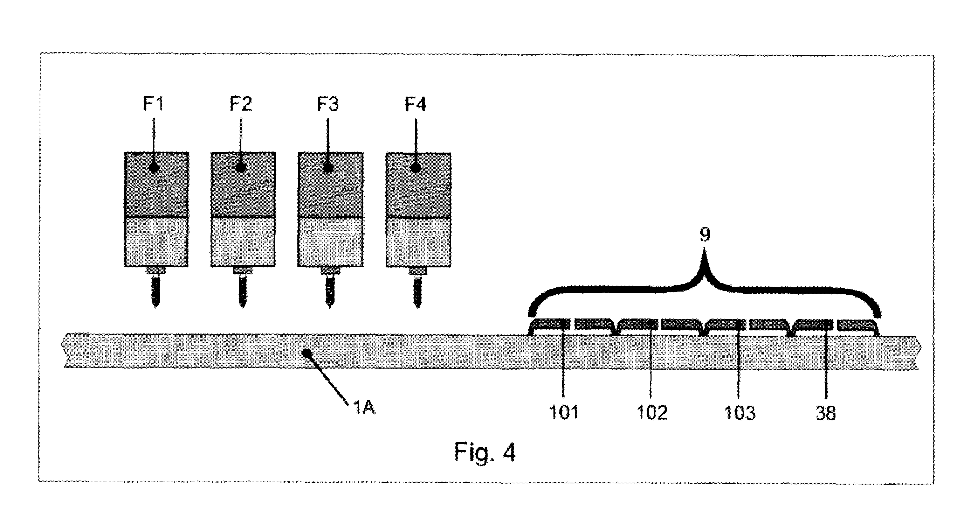

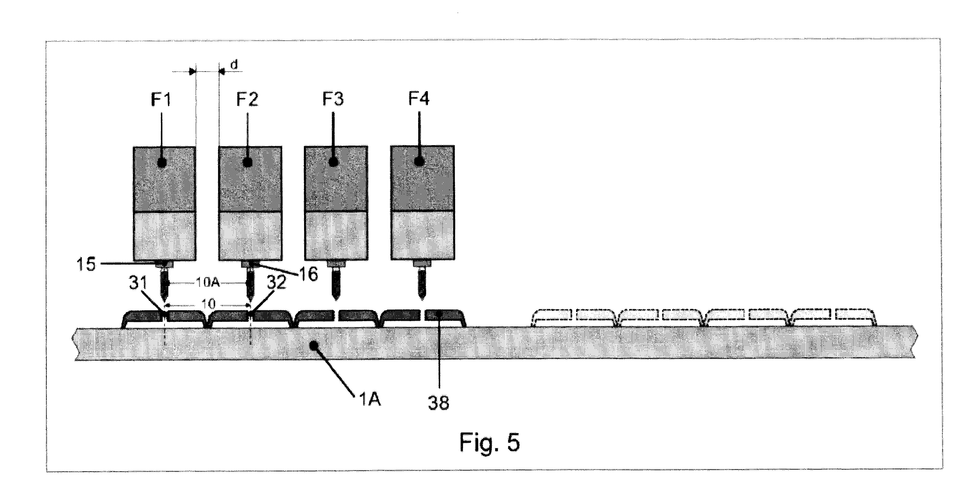

When the row 9 is eventually completed (Figure 4), this - as indicated hereinbefore - is transferred to the threading stations. The threading stations themselves are then positioned (Figure 5) at such distance d from each other as to ensure that the centre-to-centre distance 10A between contiguous mandrels 15, 16 is exactly the same as said centre-to-centre distance 10 between said bores 31, 32 of contiguous workpieces 101, 102 to be threaded.

In this way, all it takes is therefore to provide means that - upon receiving a corresponding control signal - are adapted to move along a given distance the last one 38 of the workpieces so queued into a waiting row, in order to obtain the desired and predictable result of causing all of the workpieces in the same row to be pushed by the last workpiece 38 exactly under the respective threading stations, and in order to have the individual bores to be threaded 31, 32, 33 ... getting positioned exactly, automatically and synchronously under the respective mandrels or thread-cutting bits 15, 16, etc.

At this point the required threading operations can therefore take place, wherein - as anyone skilled in the art is able to readily appreciate - such threading operations will then be carried out concurrently in the time T_{f} by all threading stations F1, F2, F3 ... on the respective workpieces that keep in a lined-up arrangement in contact with each other.

Readily appreciated can at this point be also the fact that, upon completion of the threading operations on the workpieces queued up on the line 1A, the same workpieces can be removed from the same line with the aid of means and in manners as largely known as such in the art, while the process is able to be repeated cyclically as a new queue of workpieces to be threaded is formed upstream to the threading line.

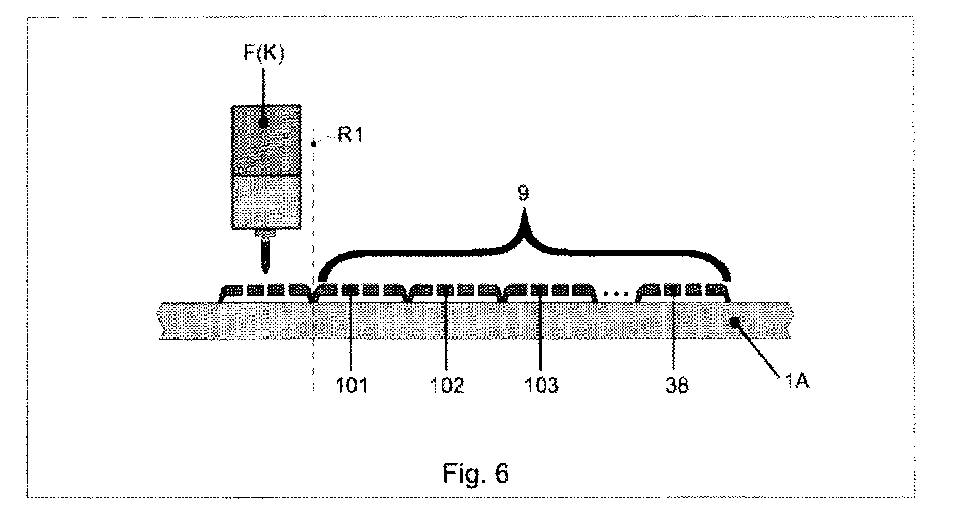

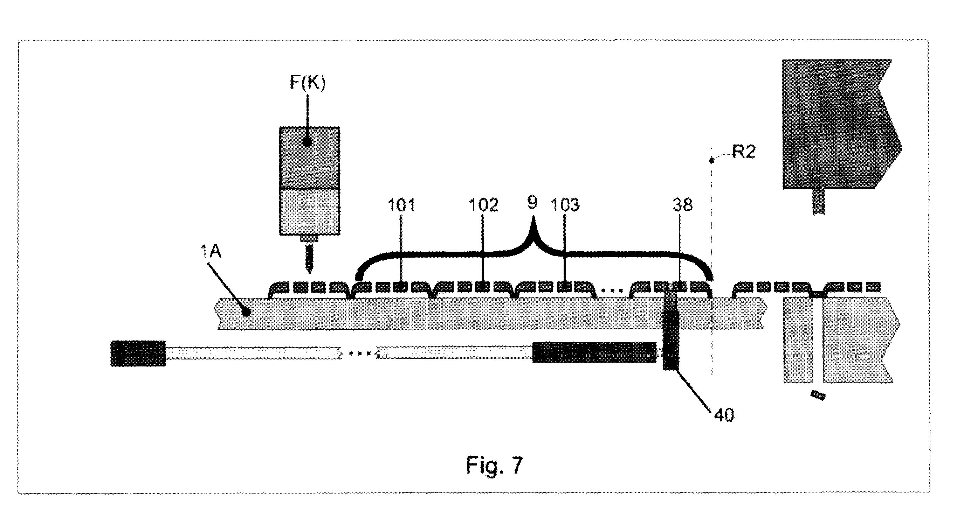

As far as the way is concerned, in which the workpieces to be threaded are queued into a waiting row downstream from the progressive forming line 1, and upstream to the threading line 1A, and in which the so queuing-up workpieces are handled synchronously, two - in some aspects contrasting - solutions are here possible, according to which:
- the workpieces are either queued behind the first workpiece 101, which is placed in a fixed initial position, as indicated with the reference numeral R1, and, when the queue is eventually complete, it is the last workpiece 38 that is moved forwards, so that it will then push forwards all other workpieces lying ahead of it in the queue (Figure 6);
- or the workpieces are queued in front of the last workpiece 38, i.e. the last workpiece joining each time the waiting row queues up onto the existing last workpiece in the row and, by taking the position thereof, pushes forwards all the workpieces ahead of it in the row by a position, so that the queue increases by a unit, while the last workpiece 38 remains constantly in the same position - indicated with the reference numeral R2 - relative to the threading line 1A (Figure 7).

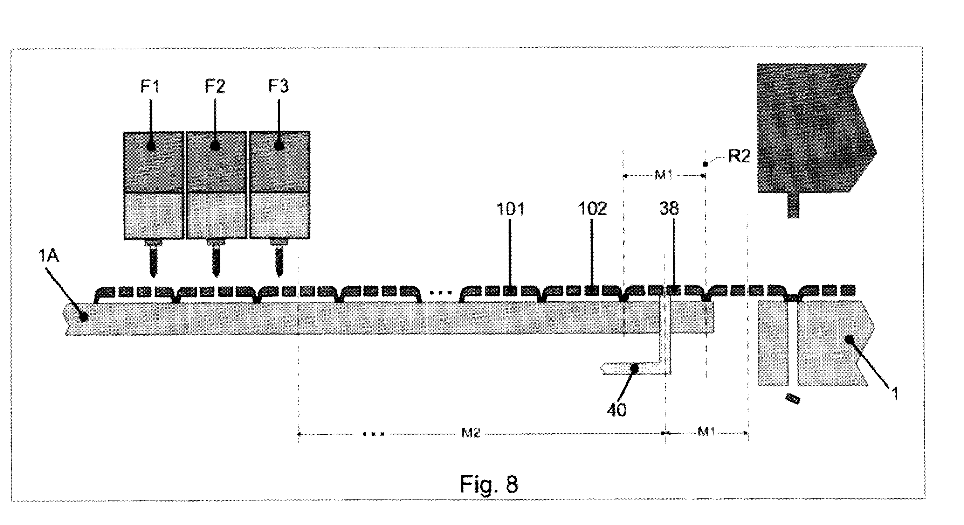

While both solutions can be implemented to the above-cited purpose, the second one appears to be more advantageous for the following reason: with reference to Figure 8, it can be noticed that the forward movement of the last workpiece 38 from the line 1 to the line 1A is carried out through a corresponding movement of a conveyance or displacement apparatus of a kind as generally known as such in the art, such as for instance a pin 40 engaging a bore, boss or lug of said last workpiece 38, or a sliding rackwork provided with appropriate members to engage said last workpiece placed on said threading line 1A.

Regardless of the manner in which it is implemented, actually, this second solution allows for said apparatus for the conveyance or displacement of the last workpiece joining the queue to perform both:
- the transfer movement M 1 of each last workpiece joining the queue and replacing the existing last piece queued up on the line 1A, and
- the final sliding forward movement M2 of said last workpiece in the queue, so as to move and position all other workpieces in the same queue under the respective threading stations.

Furthermore, since each one of said two forward movements shall each time take place to cover a respective pre-determined distance M 1 and M2, use can then be made of any of the above-cited conveyance or displacement devices, provided that the movement thereof is prearranged so as to from time to time perform either a simple queuing-up movement M 1 to cause the each time last workpiece leaving the forming line to join the queue, or the final movement M2 of the last workpiece 38 for transferring the whole row under the respective threading stations, as the case may be according to the processing step being carried out.

In other words, the need arises here for a single and same handling apparatus to be used, which is duly pre-set so as to from time to time perform two distinct movements M1 and M2 according to and depending on the processing step being carried out, thereby reaching the desired result in a simple and reliable manner.

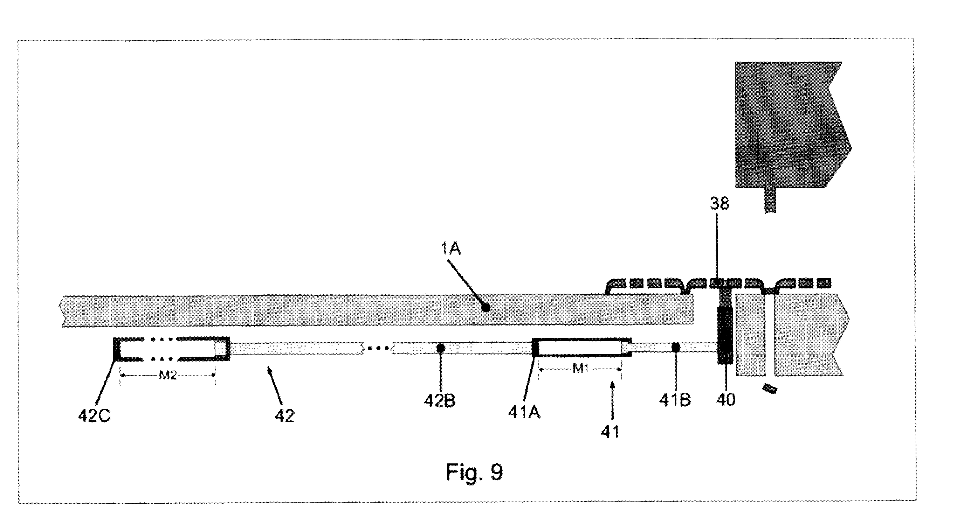

In an advantageous manner, and with reference to Figure 9, the above-noted result can be reached with the use of two distinct pneumatic double-acting cylinders 41, 42, wherein the body 41A of the first cylinder 41 is linked to the rod 42B of the second cylinder 42, the body 42C of which is firmly joined with said threading line 1A, and wherein the rod 41B of the first cylinder 41 is firmly joined with said pin 40.

In this way, if all members involved are appropriately sized and shaped, all it takes is to actuate just the first cylinder 41, whose piston performs a stroke having a length M1, of said two cylinders, for the first sequential queuing-up movement of the individual workpieces to be obtained, and to actuate just the second cylinder 42, whose piston performs a stroke having a length M2, (or even both cylinders through proper sizing of the various parts and proper actuation commands), for the final translational movement to be obtained in view of displacing the whole row 9 of sequentially queued-up workpieces towards and under the corresponding threading stations F1, F2, F3, etc.

The forward transfer movement performed by said two pneumatic double-acting cylinders, or any other equivalent means that may be used to such purpose, is most obviously followed by a corresponding backward movement and, again, by a subsequent forward movement , so as to form a next queue of workpieces and bringing the same towards and under the threading stations.

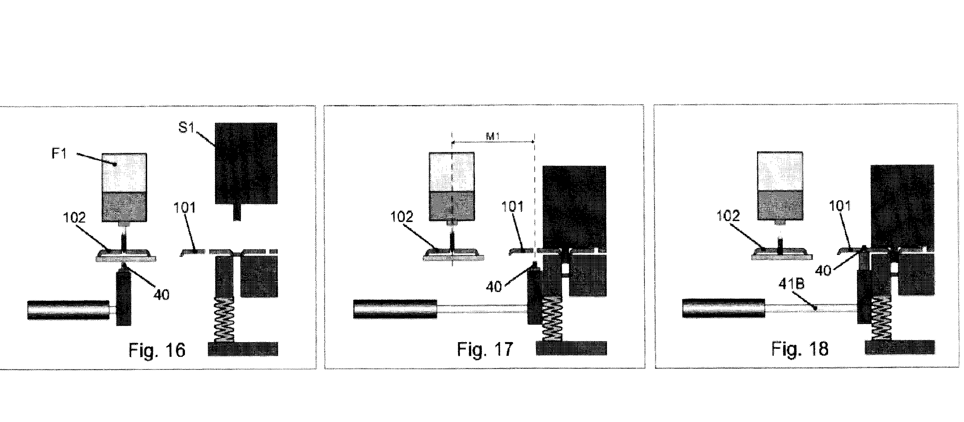

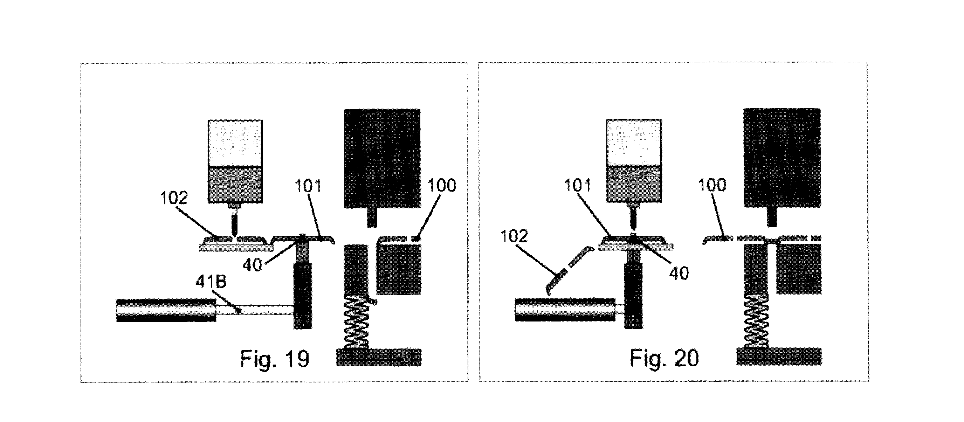

It is therefore just a reciprocating rectilinear movement of a fully conventional kind that is obtained here, as preferably associated to a crosswise reciprocating movement of an engagement member, such as the afore-cited pin 40 or the like, wherein these reciprocating movements are appropriately synchronized, using control and actuation means and modes as generally known as such in the art. Examples of such means and modes are illustrated in the accompanying Figures 16 to 20, which synthetically show the orderly succession of respective positions and functions of both the threading station F1 and said transfer and displacing means.

The above-proposed solutions typically refer to cases in which, on a same workpiece, a plurality of threading operations must be performed to cut threads in bores previously drilled or formed therein.

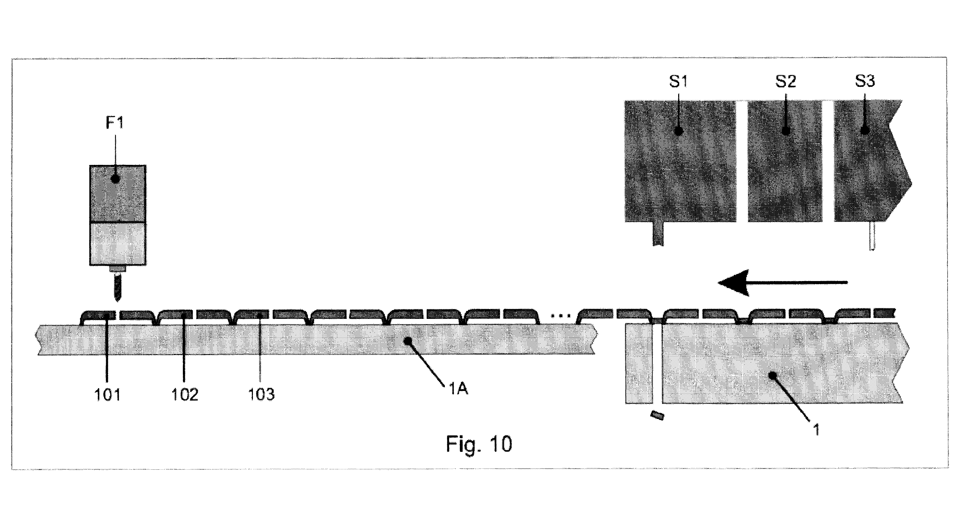

Such solutions, however, may be advantageously applied mainly to the case in which the workpiece being handled is provided with a single bore to be threaded. In fact, and with reference to Figure 10 illustrating a progressive forming line with corresponding forming stations S1, S2, S3 ..., an obviously single threading station F1, and a row of workpieces 101, 102, 103 ...that are queued up between said forming stations and said threading station F1, it can be noticed that - in this case - said workpieces are not queuing up into a definite row waiting to be transferred to threading, but - under a definite condition as explained below - the workpieces leaving the forming line are rather sent directly, without any queuing up into a waiting condition, to the threading station F1.

This sequence, consisting in a number of processing steps performed strictly "in series" relative to each other, can only be implemented in the case where the slowest processing step, i.e. the one performed at the threading station F1 in this example, is anyway compatible with the processing pace in the other forming stations upstream thereto.

In fact, even if the time that - as noted above - is required to complete the forming operations is much shorter than the time that is technically required to complete threading, actually, it should anyway be duly considered that - unlike the case in which threading was actually integrated in the progressive metalworking line - the threading operation can be carried out in a time that substantially equals the aggregate sequencing time, i.e. pace time of the progressive forming line, so that, if said threading step at the station F1 lasts for a time that is altogether shorter than or equal to the pace time through the forming stations upstream thereto, it becomes possible and advantageous to arrange for said processing steps to be carried out "in series", i.e. not only in the sense that they are carried out on a same production line, on which the workpieces are processed one at a time moving through the various stations in a physical orderly sequence, but even in the sense that the individual processing steps on a same workpiece are performed "in series" also in time, i.e. one after the other.

In practice, and in view of enabling those skilled in the art to most readily understand the concept, it is an optimal production "levelling" that is advantageously obtained in this way, according to the well-known principles of mass production, which can in this case be implemented thanks to the fact that the mechanically slowest processing step is practically disengaged, i.e. set free from the other processing steps conditioning it, so that not the strictly technical times needed to complete processing, but the overall pace times of the two kinds of metalworking processes become fully compatible with each other.

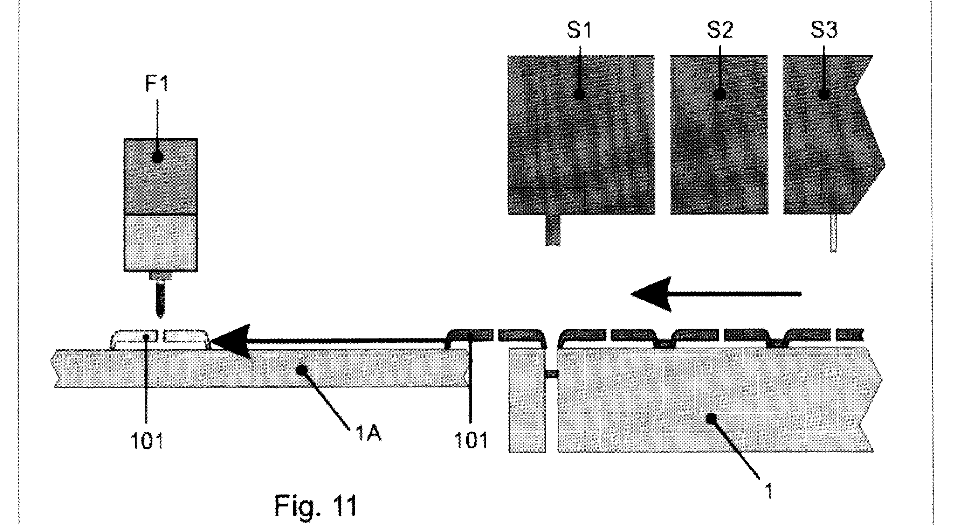

Readily appreciated will at this point be also the fact that the above described metalworking line may be embodied to take both the configuration shown in Figure 10, with a succession of workpieces 101, 102, ... leaving in series the forming line through the various forming stations S1, S2, ..., in which said workpieces queue up regularly and move jointly forwards in a step-by-step sequence until reaching the threading station F1, and the configuration shown in Figure 11, in which there is for instance no queuing up of workpieces forming into a row, and each workpiece - after the last forming operation - is directly transferred individually onto the threading station F1 with the aid of handling means (not shown) generally known as such in the art.

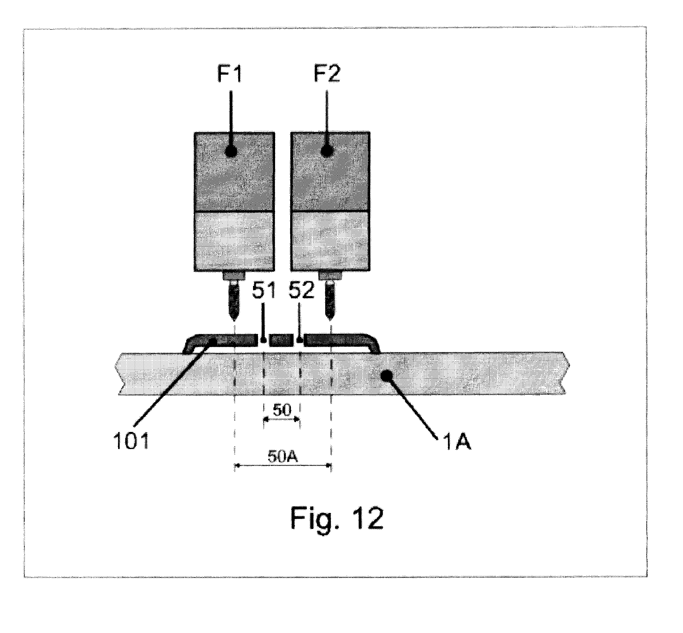

Assuming now that, unlike the afore-considered propositions, each workpiece, i.e. each mechanical part to be produced is not provided with just a single respective bore to be threaded, but rather with a plurality of bores, such as for instance two bores 51, 52 that have to undergo threading, two distinct cases may be identified, i.e.:
(a) a first case, in which the centre-to-centre distance 50 between two bores 51, 52 to be threaded is smaller than the minimum centre-to-centre distance 50A between the corresponding mandrels or thread-cutting bits 55, 56 (see Figure 12);
(b) a second, fully opposite case, in which the centre-to-centre distance 50 between two bores 51, 52 to be threaded is on the contrary greater than or equal to the centre-to-centre distance 50A between the corresponding mandrels or thread-cutting bits 55, 56.

As far as this second case is concerned, it can most easily be noticed that the situation can be logically assimilated to the condition considered in connection with the preceding Figures 2 to 5, along with the related explanations.

In such condition, in fact, there is nothing to prevent the two thread-cutting bits 55, 56 from being able to concurrently process the respective bores 51, 52 on a same workpiece, exactly in the same manner as there were just a single threading operation to be carried out on said workpiece; in more general terms, and in principle, there is therefore nothing to prevent one from figuring out the possibility for an indefinite number of processing operations to be carried out concurrently by respective threading stations/thread-cutting bits on a same workpiece, i.e. mechanical part, provided of course that no mechanical interference is created between the respective threading stations.

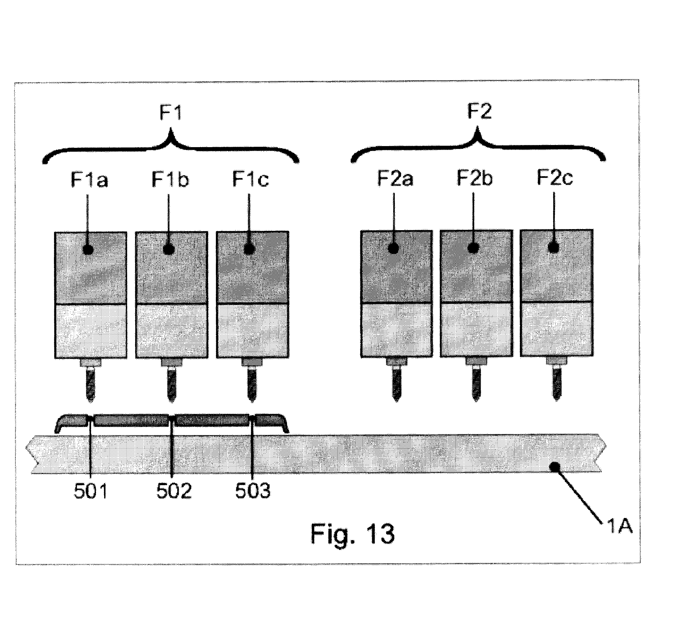

As a result, all of the considerations set forth afore continue to apply, with the sole variation that, at each threading station F1, F2, etc.,
- instead of a single threading operation of a respective workpiece by a respective thread-cutting bit,
- a plurality of threading operations are carried out concurrently in respective bores 501, 502, 503 by respective threading stations F1a, F1b, F1c ..., all of them included in a more general threading station F1, as illustrated by way of example in Figure 13.

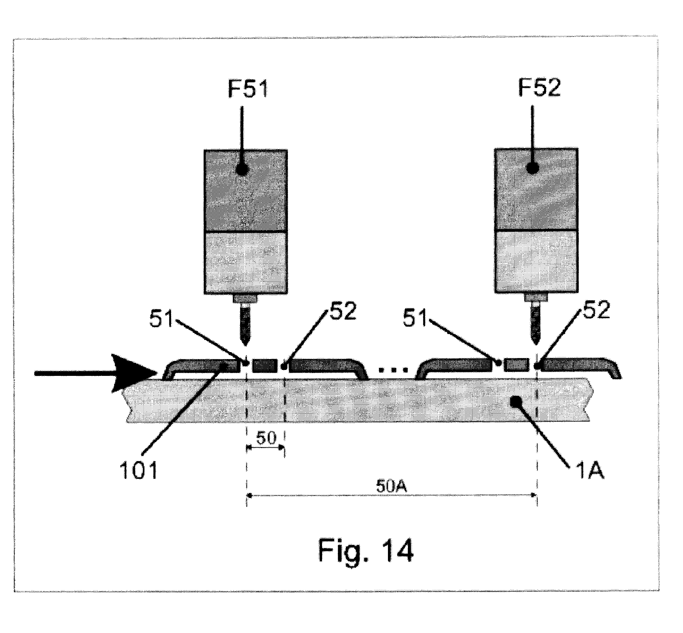

On the other hand, in the first case cited under a) above, in which the centre-to-centre distance 50 between two bores to be threaded 51, 52 is smaller than the minimum centre-to-centre distance 50A between the corresponding thread-cutting bits 55, 56, the situation is easily solved by providing (see Figure 14) two distinct threading stations F51, F52, in which said two bores are threaded separately, one by one, in successive moments.

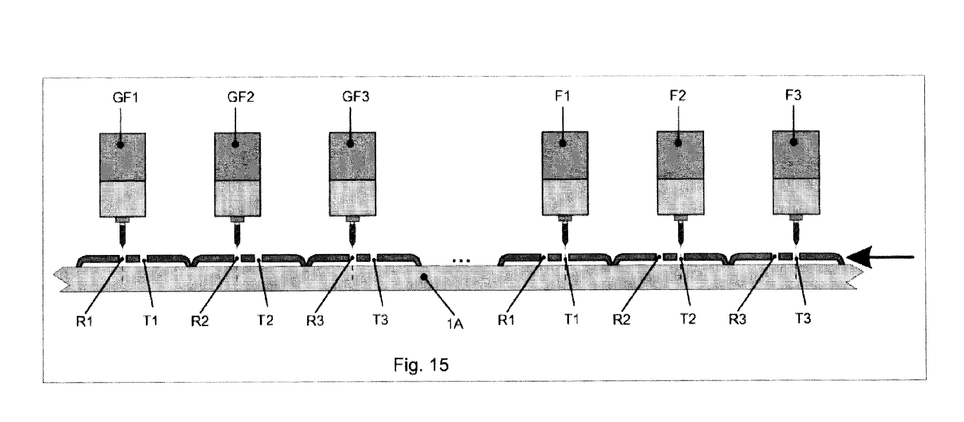

It will be readily appreciated that the above-described solution can be embodied in any of a number of different ways and forms. In this connection, and with particular reference to Figure 15, a preferred embodiment consists of a first group of threading stations F1, F2, F3, etc. provided in a side-by-side arrangement relative to each other, each one of which is adapted to concurrently cut threads in corresponding identical bores R1, R2, R3, etc., respectively, that are provided in respective queued-up workpieces, and a second group of threading stations GF1, GF2, GF3 ..., provided again in a side-by-side arrangement relative to each other, each one of which is adapted and operated so as to concurrently cut threads in other corresponding identical bores T1, T2, T3 ..., respectively, provided in respective queued-up workpieces, as contemplated in the cases illustrated in the preceding Figures 2 to 5. Therefore, the workpieces are first queued up into a row, transferred under the first group of threading stations F1, F2, F3, etc., where they undergo a first threading operation, and then - again in the queued-up condition thereof - are moved further on under said second group of threading stations GF1, GF2, GF3, etc., where they undergo a second threading operation involving those respective bores T1, T2, T3, etc., which could not be threaded under the first group of threading stations F1, F2, F3 ... owing to a substantial lack of space for the related threading stations to be able to be installed there.

It will also be readily appreciated that the solution described above for the case of threads to be cut in bores located quite close to each other in a same workpiece equally applies - with the due simplifications - to the case in which only said two threads are to be cut in said workpiece, i.e. a case that falls practically under the condition that has been described hereinbefore with reference to the case of threads being cut in a single bore at a time.

Basically, the principle governing the selection of a particular option concerning the threading stations and the arrangement thereof is first of all based on establishing how many bores to be threaded are provided in each single workpiece, actually. If the workpiece features more than a single bore to be threaded - and if these bores are adequately spaced from each other so as to allow for respective threading stations to be installed and operate concurrently - the same threading stations may then be grouped into a single processing step; if such a concurrent processing step is on the contrary not possible, an additional group of threading stations is provided successively for the workpieces already partly threaded at the first group of threading stations to be jointly transported thereto in view of having the job completed, wherein the threading stations in this second group are of course adapted to thread respective bores which, as provided in respective workpieces, had obviously not been threaded at the threading stations in the first group.

All those skilled in the art will at this point be fully able to readily appreciate that the considerations set forth above equally apply to the case in which each workpiece features only two bores to be threaded, so that - depending on the actual extent to which such bores are spaced from each other - either a single threading station or two threading stations will therefore be required.

Although the present invention is most advantageously applied to those cases in which the processing steps that are moved off the forming line, so as to be grouped and carried out downstream therefrom, imply cycle times that are typically longer than the sequence or pace time of the progressive forming line itself, such ratio of the related cycle times to each other is not a real pre-requisite, since the present invention may in fact be advantageously implemented also in the case in which - to use a generally known terminology - Tr<Ts. In this case, the advantage deriving from a strictly production-related point of view - depending on the overall cycle time - may be ultimately lost. However, all other advantages described afore, and concerning in particular a reduction in space requirements, the separation of the different kinds of lubrication oils from each other, the elimination of threading chips and shavings from the forming line, and the positioning accuracy of the workpieces, remain fully unaltered.

## Claims

1. Automatic metalworking line, in particular of the kind used in connection with sheet-metal forming presses, comprising a plurality of forming stations (S1, S2, S3) and a plurality of threading stations (F1, F2, F3), and adapted to process in a step-by-step sequence a succession of mechanical workpieces (101, 102, 103), **characterized in that** said forming stations are included in a respective forming line (1), and that said threading stations are provided along a respective threading line (1A), which is arranged at the end of said forming line (1) feeding said threading line (1A) with the workpieces first produced and processed therein.

2. Automatic metalworking line according to claim 1, **characterized in that** said threading stations (F1, F2, F3) are provided in a number that is not smaller than the ratio (K) of the threading cycle time (T_{f}) on said threading line to the forming cycle time or pace time (Tₛ) on said forming line (1).

3. Automatic metalworking line according to claim 1 or 2, **characterized in that** it is provided with transfer means adapted to queue up said mechanical workpieces into a row (9) along the threading line (1A) and transfer said workpieces jointly onto respective ones of said threading stations (F1, F2, F3).

4. Automatic metalworking line according to any of the preceding claims, **characterized in that** said transfer means transfer said workpieces, as previously queued up along said threading line (1A), when the number of said workpieces in said row is equal to or smaller than the number of said threading stations (F1, F2, F3).

5. Automatic metalworking line according to claim 4, **characterized in that** said transfer means act upon the last one (38) of said mechanical workpieces queued up into said row (9).

6. Automatic metalworking line according to any of the preceding claims, **characterized in that** it is provided with a single threading station (F1), and **in that** said mechanical workpieces are transferred on to said single threading station by transferring a single workpiece at a time from said progressive forming line (1) to said single threading line (F1).

7. Automatic metalworking line according to any of the claims 1 to 5, **characterized in that** it is provided with a single threading station (F1), and **in that** said mechanical workpieces are transferred on to said single threading station by transferring a plurality of said queued-up mechanical workpieces (101, 102, 103; Fig. 10) in a step-by-step sequence from said progressive forming line (1) to said single threading line (F1).

8. Automatic metalworking line according to any of the claims 1 to 5, **characterized in that** at least a threading station (F1) comprises a plurality of threading sub-stations (F1a, F1b, F1c) adapted to concurrently cut threads in respective bores (501, 502, 503) of a same workpiece.

9. Automatic metalworking line according to any of the claims 1 to 5, **characterized in that** each threading station (F51, F52) processes a respective bore (51, 52) of a respective workpiece at successive moments, the centre-to-centre distance (50A) between the respective mandrels or thread-cutting bits (55, 56) being greater than the centre-to-centre distance (50) between said bores.

10. Automatic metalworking line according to any of the claims 1 to 5, **characterized in that** said threading stations are grouped into distinct sub-assemblies (F1, F2, F3; GF1, GF2, GF3), **in that** the threading stations of a same one of said sub-assemblies (F1, F2, F3) are adapted to concurrently cut threads in a respective bore (R1, R2, R3) of a respective mechanical workpiece, and **in that** the threading stations of another one of said sub-assemblies (GF1, GF2, GF3) are adapted to concurrently cut threads in another respective bore (T1, T2, T3) of the same respective mechanical workpiece.

11. Automatic metalworking line according to claim 5, **characterized in that** said transfer means are adapted to cause said workpieces to undergo a first displacement (M1), so that the last queued-up workpiece (38) is placed in a position having a pre-established reference (R2), and a second displacement (M2), in which said last workpiece (38) is moved forwards by such length as to enable each one of such queued-up workpieces to be disposed in a pre-determined position relative to a respective threading station.

12. Automatic metalworking line according to claim 11, **characterized in that** said transfer means are comprised of two distinct pneumatic double-acting cylinders (41, 42) linked with each other so that the body (41A) of the first cylinder (41) is connected to the rod (42B) of the second cylinder (42).
